# EUROPÄISCHE PATENTSCHRIFT

(11) **EP 0 565 859 B1**
(45) Veröffentlichungstag und Bekanntmachung des Hinweises auf die Patenterteilung: **03.06.1998**
(21) Anmeldenummer: 93103762.6
(22) Anmeldetag: 09.03.1993
(51) Int. Cl.: H04M 19/04

(54) **Tonrufschaltung**
Ringer circuit
Circuit de sonnerie

(30) Priorität: 16.04.1992 DE 4212858
(43) Veröffentlichungstag der Anmeldung: 20.10.1993
(73) Patentinhaber: SIEMENS AKTIENGESELLSCHAFT, 80333 München (DE)
(72) Erfinder: Bardl, Artur, Dipl.-Ing., W-8000 München 70 (DE); Navratil, Emil, Dr. Phys., W-8000 München 90 (DE)

(56) Entgegenhaltungen:
- EP-A- 0 030 739
- EP-A- 0 137 901
- DE-A- 3 112 166

## Beschreibung

Die Erfindung betrifft eine Tonrufschaltung.

Eine von Vermittlungsstellen zum Rufen eines Teilnehmers gesendete Rufwechselspannung wird bei modernen Telefonen mit elektronischer Ruftonerzeugung in zwei Komponenten aufgespaltet. Eine Komponente ist die darin enthaltene Information, also beispielsweise die Frequenz und die Amplitude des Signals, und die andere Komponente ist die übertragene elektrische Leistung, die für den Betrieb einer Einrichtung zur Messung von Frequenz und Amplitude und zur Erzeugung des akustischen Tonrufsignals dient. Die von den Vermittlungsstellen abgegebene elektrische Leistung muß mit gutem Wirkungsgrad den einzelnen Verbrauchern zugeführt werden, um eine hohe akustische Leistung des Tonrufsignals zu erzielen.

Bekannte Tonrufbausteine steuern häufig einen Piezokristallwandler, der aufgrund seiner Hochohmigkeit und seines guten akustischen Wirkungsgrades eine gute Leitungsanpassung an die Impedanz des Rufwechselspannungsgenerators in der Vermittlung gewährleistet. Eine ausreichende Spannungsversorgung für einen Mikrocontroller, mit dem ein flexibler und umfangreicher Funktions- und Bedienungskomfort bei der Tonruferkennung und Tonerzeugung möglich wäre, steht dabei nicht zur Verfügung.

Soll die Tonrufabstrahlung über einen niederohmigen Lautsprecher erfolgen, so muß die hochohmige Ausgangsstufe des Rufwechselspannungsgenerators mit Hilfe eines Übertragers an den niederohmigen Lautsprecher angepaßt werden. Im Sprechtrieb, wenn der Lautsprecher durch den Empfangsweg betrieben werden soll, muß meist der Übertrager abgeschaltet und der Lautsprecher an den Verstärker direkt angekoppelt werden. Auch sind Lösungen mit zwei Lautsprechern unterschiedlicher Impedanz bekannt.

Um diesen zusätzlichen Aufwand einzusparen, sind beispielsweise in der deutschen Patentanmeldung P 41 13 113.4 Lösungen mit einem Gleichstromumsetzer beschrieben, der die hochohmige Impedanz im Tonruffall in eine niederohmigere Impedanz bei entsprechend herabgesetzter Spannung umwandelt und dabei auch die Spannungsversorgung für den Betrieb eines Mikrocontrollers ermöglicht. Die dabei erreichbaren Wirkungsgrade des Gleichspannungsumsetzers liegen bei etwa 70 %. Die an den Schallwandler abgegebene Leistung kann dabei unter Umständen auf nicht mehr zufriedenstellende Werte absinken.

Aus der EP-A 0 137 901 ist eine Schaltungsanordnung für einen Fernsprechapparat bekannt geworden. Die Schaltungsanordnung weist unter anderem einen Verpolungsschutzgleichrichter, einen piezoelektrischen Schallwandler und eine Steuerschaltung auf. Dabei ist die Steuerschaltung fest mit einer Stromversorgungsschaltung verbunden. Die Steuerschaltung steuert eine Reihe von Schalttransistoren, so daß der Schallwandler einerseits ein Rufsignal und andererseits ein Sprachsignal abgeben kann. Da die Steuerschaltung permanent mit Energie versorgt wird, steht unter Umständen bei einem abzugebenden Rufsignal nicht genügend Leistung am Schallwandler zur Verfügung.

Aufgabe der Erfindung ist es, eine Tonrufschaltung mit höherem Wirkungsgrad anzugeben.

Diese Aufgabe wird durch eine Tonrufschaltung gemäß Patentanspruch 1 gelöst. Ausgestaltungen und Weiterbildungen der Erfindung sind Gegenstand von Unteransprüchen.

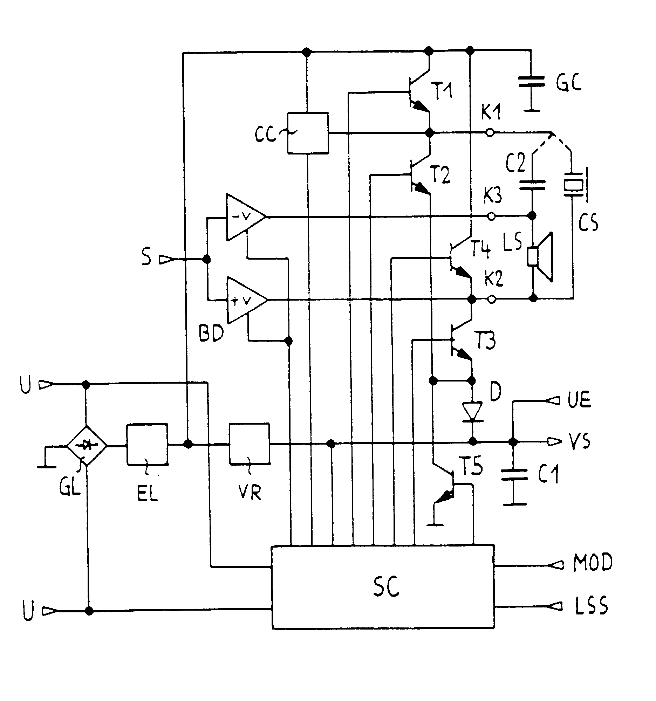

Die Erfindung wird nachfolgend anhand des in der einzigen Figur der Zeichnung dargestellten Ausführungsbeispiels näher erläutert.

Die im Ausführungsbeispiel gezeigte Tonrufschaltung enthält einen durch eine Rufwechselspannung U gespeisten Brückengleichrichter GL, an dessen Ausgang über eine Einschaltlogik EL ein Glättungskondensator GC angeschlossen ist. Der Brückengleichrichter GL und der Glättungskondensator GC bilden eine Gleichrichteinheit, die aus der Rufwechselspannung U eine erste Versorgungsgleichspannung über dem Kondensator GC erzeugt und deren Ausgangsanschlüsse durch die Anschlüsse des Glättungskondensators GC gegeben sind. Die dazwischen liegende Einschaltlogik EL ist so ausgebildet, daß sie erst bei Überschreiten eines vorgegebenen Wertes der Rufwechselspannung U den Glättungskondensator GC mit dem Brückengleichrichter GL koppelt. An einem Ausgangsanschluß, nämlich in diesem Fall dem positiven Ausgangsanschluß der Gleichrichteinheit ist der Kollektor eines npn-Transistors T1 angeschlossen, dessen Emitter mit einer Klemme K1 verbunden ist. An der Klemme K1 liegt zudem der Kollektor eines npn-Transistors T2, dessen Emitter mit dem Kollektor eines npn-Transistors T5 und dem Anodenanschluß einer Diode D verbunden ist. Der andere Kathodenanschluß der Diode D ist mit einem Anschluß eines Kondensators C1 verschaltet, dessen anderer Anschluß ebenso wie der Emitter des Transistors T5 an dem anderen, also negativen Anschluß der Gleichrichteinheit angeschlossen ist.

Weiterhin ist in Weiterbildung der Erfindung ein npn-Transistor T3 über seinen Emitter mit dem Anodenanschluß der Diode D und über seinen Kollektor mit einer Klemme K2 verbunden. Zwischen dem positiven Anschluß der Gleichrichteinheit und der Klemme K2 liegt die Kollektor-Emitter-Strecke eines npn-Transistors T4. Sämtliche Transistoren T1 bis T5 werden primär als steuerbare Schalter betrieben, die durch eine Schaltersteuerung SC über ihre Basen gesteuert werden. Die Schaltersteuerung SC wird durch die über dem Kondensator C1 liegende Spannung versorgt und öffnet und schließt die beiden Transistoren T1 und T2 abwechselnd und zueinander gegenphasig. Die Ansteuerung der Transistoren T1 und T2 hängt dabei von mehreren Bedingungen der Rufwechselspannung U ab, weshalb die Schaltersteuerung SC darüber hinaus auch mit der Rufwechselspannung U beaufschlagt ist. Bei der Schaltersteuerung SC sind dabei zwei Betriebsarten möglich, die durch ein entsprechendes Betriebsartensignal MOD ausgewählt werden können. Bei einer ersten Betriebsart ist der Transistor T3 permanent leitend und der Transistor T4 permanent gesperrt. Beim zweiten Betriebsfall dagegen wird der Transistor T3 synchron zum Transistor T1 und der Transistor T4 synchron zum Transistor T2 durchgeschaltet bzw. gesperrt.

Zwischen die Gleichrichteinheit und den Kondensator C1 ist zudem ein Spannungsregler VR geschaltet. Außerdem ist eine Klemmschaltung CC vorgesehen, die dann wenn alle Transistoren T1 bis T5 gesperrt sind, die Spannung über dem Transistor T1 begrenzt. Die Klemmschaltung CC kann dabei beispielsweise durch die Schaltersteuerung SC gesteuert werden. Schließlich ist eine potentialfreie Endstufe, in diesem Fall eine Brückenendstufe BD vorgesehen, die beispielsweise aus zwei durch ein Sprechsignal S angesteuerten, gegenphasig betriebenen Verstärkern mit einer Verstärkung v bzw. -v besteht. Die Ausgangsanschlüsse der Brückenendstufe BD sind dabei mit der Klemme K2 bzw. mit einer Klemme K3 verbunden. Zwischen die Klemmen K2 und K3 ist ein vorzugsweise dynamischer Schallwandler, also beispielsweise ein Lautsprecher LS geschaltet, der primär zur Abstrahlung der Sprechsignale, beispielsweise bei Mithör-oder Freisprecheinrichtungen, vorgesehen ist. Zur akustischen Tonruferzeugung ist nun wahlweise ein Kondensator C2 zwischen die Klemmen K1 und K3 oder ein vorzugsweise piezoelektrischer Schallwandler nämlich ein Piezokristallwandler CS zwischen die Klemmen K1 und K2 zu schalten. Dabei wird bevorzugt im ersten Betriebsfall der Kondensator C2 und im zweiten Betriebsfall der Piezokristallwandler CS eingesetzt.

Der erste Betriebsfall, bei dem der Transistor T3 permanent durchgeschaltet und der Transistor T4 permanent gesperrt ist, ist einer Schaltung gleichzusetzen, bei der auf den Transistor T4 verzichtet wird und der Transistor T3 durch eine direkte Verbindung ersetzt wird. Beim ersten Betriebsfall wird ebenso wie beim zweiten Betriebsfall bevorzugt mit sich nicht überlappenden Ansteuersignalen für die Transistoren T1 bis T4 gearbeitet, damit beim Übergang vom leitenden in den sperrenden Zustand und umgekehrt gegenphasig anzusteuernde Transistoren nicht gleichzeitig leitend sind. Die Ansteuersignale für die Transistoren T1 bis T4 werden in Abhängigkeit von beispielsweise der Frequenz und/oder der Amplitude der Rufwechselspannung U generiert. In einer ersten Phase der Ansteuersignale wird beim ersten Betriebsfall der Transistor T1 durchgeschaltet. Damit fließt der Strom durch den Kondensator C2, den Lautsprecher LS, den ebenfalls durchgeschalteten Transistor T3, die Diode D und den Kondensator C1. Die Spannung am Kondensator C1 steigt auf einen Wert an, der sich aufgrund der Spannungsteilung zwischen den Kondensatoren C1 und C2 abzüglich des Spannungsabfalls am Lautsprecher LS und an den Transistoren T1 und T2 ergibt. Der Strom durch den Lautsprecher LS lenkt dabei die Membran aus. Der Spannungsanstieg am Kondensator C1 wird von der Schaltersteuerung SC ausgewertet, die bei Überschreiten eines vorgegebenen Wertes den Transistor T5 durchsteuert. Der nicht mehr benötigte Ladestrom für den Kondensator C1 wird dadurch zum negativen Anschluß der Gleichrichteinheit abgeleitet. Dadurch wird aber die Ladung auf dem Kondensator C2 weiter erhöht. Ist der Ladevorgang abgeschlossen, so fließt auch kein Strom mehr durch den Lautsprecher LS. In der daran anschließenden Übergangsphase werden alle Schalter der Transistoren T1 und T5 bzw. der Transistoren T1, T3 und T5 gesperrt.

Die Spannung zwischen dem Emitter des Transistors T1 und dem Anodenanschluß der Diode D bestimmt den Strom über den Lautsprecher LS und damit die Lautstärke des abgegebenen Ruftons. Durch die Schaltersteuerung SC wird deshalb in Weiterbildung der Erfindung diese Spannung z. B. in Abhängigkeit von einem Lautstärkesteuersignal LSS und/oder von der Amplitude der Rufwechselspannung U auf einen bestimmten Wert festgelegt. Dies erfolgt dadurch, daß der Transistor T1 als Emitterfolger betrieben wird, dessen Basis auf ein dementsprechendes Potential gelegt wird.

Wird die Schaltersteuerung SC derart ausgebildet, daß ein Bezug zur maximalen Rufwechselspannung U hergestellt wird, so wird gewährleistet, daß unabhängig von den Betriebsbedingungen eine Variation der Lautstärke ohne Steuertotzeit möglich ist.

Bei wechselnder Lautstärke und bei unterschiedlicher Stromaufnahme der Schaltersteuerung SC sowie gegebenenfalls weiterer aus dem Kondensator C1 gespeister Einheiten VS verschiebt sich der Zeitpunkt, zu dem der Transistor T5 eingeschaltet wird, innerhalb einer Schaltphase automatisch. Die Schaltschwelle zum Durchschalten des Transistors T5 ist so dimensioniert, daß unter ungünstigsten Bedingungen ein ausreichender Versorgungsstrom aus dem Kondensator C1 entnommen werden kann, ohne daß der Spannungsregler VR aktiv wird. Bei höherer Stromentnahme bzw. geringerer Lautstärke wird automatisch bei Absinken der Spannung über dem Kondensator C1 der Spannungsregler VR zum Stützen der Spannung über den Kondensator C1 bevorzugt während der Übergangsphase, in der die Transistoren T1 bis T4 gesperrt sind, aktiviert. Weiterhin werden günstigerweise die Transistoren T1 bis T4 als npn-Transistoren ausgeführt, damit auch der Basissteuerstrom an der Verbesserung des Wirkungsgrades beteiligt ist. Prinzipiell ist jedoch auch eine Umkehr der Steuerung auf pnp-Transistoren möglich. Desweiteren kann die bekannte Tonrufschaltung auch in MOS- oder BICMOS-Technologie ausgeführt werden. Schließlich sind die Schalterfunktionen darüber hinaus auch mit externen Transistoren realisierbar.

In der Übergangsphase wird das Emitterpotential des Transistors T1 auf einem bestimmten Wert festgelegt, damit die potentialfrei schwimmende Schaltung bestehend aus dem geladenen Kondensator C2 und dem Lautsprecher LS nicht durch parasitäre Ströme in durchbruchsgefährdete Spannungsbereiche laufen kann.

Auf die Übergangsphase folgt eine zweite Phase in der der Transistor T2 durch die Schaltersteuerung SC durchgeschaltet und damit der geladene Kondensator C2 über den Lautsprecher entladen wird. Es entsteht dadurch am Lautsprecher LS ein negativer Stromimpuls mit der beim Laden des Kondensators C2 festgelegten Spannung. Die am Lautsprecher LS auftretende Lautstärke ist damit von sich aus bereits durch die Spannungsbegrenzung beim Laden des Kondensators C2 gegeben. Die Schaltersteuerung SC hält den Transistor T2 unabhängig von der Rufwechselspannung U bis zum Erreichen eines gegebenen Spannungswertes leitfähig. Auf diese Weise kann sich der Kondensator C2 unabhängig von der vorgegebenen Zeit entladen. Dies wird bei der Schaltersteuerung SC beispielsweise dadurch erreicht, daß eine stromabhängige Selbsthalteschaltung, etwa einem Gebilde mit Thyristorfunktion, gezündet wird und diese den Transistor T2 bis zum Erreichen der Löschspannung leitfähig hält. Auf diese Weise kann sich der Kondensator C2 unabhängig von der vorgegebenen Zeit entladen. Der dem Transistor T2 zugeführte Basisstrom addiert sich zum Entladestrom des Kondensators C2. Der Basisstrom der diesem Kreis zugeführt wird, fließt über die Klemmschaltung CC jetzt mit umgekehrter Polarität ab. Die Klemmschaltung CC wird ebenfalls von der Schaltersteuerung SC gesteuert, wobei bevorzugt die Klemmschaltung CC dann aktiviert ist, wenn der Transistor T2 durchgeschaltet ist. Die Transistoren T1, T3 und T5 sind in dieser Phase gesperrt.

Die Ausgänge der Brückenendstufe BD sind im Tonrufbetriebsfall abgeschaltet bzw. in einen sogenannten Tri-State-Zustand geschaltet, und sind derart ausgelegt, daß sie sich spannungsmäßig in einen zulässigen durchbruchsfreien Zustand befinden. Im Sprechbetriebsfall sind im Gegensatz dazu die Transistoren T1 bis T5 sowie die Schaltersteuerung SC und der Spannungsregler VR abgeschaltet bzw. befinden sich im Tri-State-Zustand und die Brückenendstufe BD ist aktiviert. Die zur Unterscheidung beider Betriebsfälle nötige Steuerinformation wird aus dem Gabelschalterzustand (Hörer aufgelegt oder abgenommen) abgeleitet. Jedoch kann zum Zwecke der Erzeugung eines Eigenrufs im Sprechbetriebsfall die erfindungsgemäße Tonrufschaltung unabhängig vom Gabelschalterzustand aktiviert und die Brückenendstufe BD abgeschaltet werden. Die Spannungsversorgung erfolgt dabei aus einer externen Spannungsquelle, beispielsweise einem externen Sperrwandler UE, die an den Kondensator C1 angeschlossen ist. In diesem Betriebsfall bleiben die Einschaltlogik EL und der Spannungsregler VR außer Betrieb und die Schaltschwelle für den Transistor T5 wird unabhängig von der Spannung über dem Kondensator C1 während der ersten Phase aktiviert.

Bei einer zweiten Betriebsart wird die erfindungsgemäße Tonrufschaltung mit dem Piezokristallwandler CS betrieben, wobei der Kondensator C2 entfällt. Diese Betriebsart wird der Schaltersteuerung SC über das Betriebsartauswahlsignal MOD signalisiert. Bei dieser Betriebsart werden in der Übergangsphase die Transistoren T1 bis T5 abgeschaltet. In der ersten Phase werden wie bei der ersten Betriebsart von der digitalen Steuerung die Transistoren T1 und T3 durchgesteuert. Damit fließt ein Strom durch den Transistor T1, den Piezokristallwandler CS, den Transistor T3 sowie die Diode D auf den Kondensator C1. Die Spannung über dem Kondensator C1 steigt dadurch bei kapazitiver Spannungsteilung zwischen den Kapazitäten des Piezokristallwandlers CS und des Kondensators C1 an. Nach einer weiteren Übergangsphase, in der wiederum die Transistoren T1 bis T5 gesperrt sind, folgt eine zweite Phase, die gegenüber der zweiten Phase beim ersten Betriebsfall verändert abläuft. In dieser Phase erfolgt eine Umpolung der Spannung am Piezokristallwandler CS (Brückenbetrieb) durch Einschalten der Transistoren T2 und T4. Dabei wird die Lautstärke durch die Begrenzung des Ansteuersignals für den Transistor T4 - in gleicher Weise wie beim Transistor T1 in der ersten Phase - durch die Schaltersteuerung SC eingestellt. Im Gegensatz zum ersten Betriebsfall wird darüber hinaus der Transistor T2 nicht bis zur nahezu vollständigen Entladung der Kapazität des Piezokristallwandlers CS durchgeschaltet (keine Thyristorfunktion). Der Transistor T1 bleibt während dieser Phase gesperrt.

Im übrigen läuft die Ladefunktion der Kapazität des piezzoelektrischen Schallwandlers CS nach dem gleichen Prinzip wie im ersten Betriebsfall bei der Kapazität des Kondensators C2 ab. Jedoch erfolgt im zweiten Betriebsfall ein zweimaliges Laden während einer Periode, d. h. während erster und zweiter Phase insgesamt. Dies ist deshalb günstig, da der piezoelektrische Schallwandler eine geringere Kapazität aufweist.

Neben einem geringen schaltungstechnischen Aufwand zeichnet sich die erfindungsgemäße Tonrufschaltung vor allem durch hohe Flexibilität und einem sehr hohen Wirkungsgrad. Darüber hinaus ist von Vorteil, daß die im Rufbetriebsfall aufgebaute Energie auf den Kondensatoren GC und C2 beim Abheben des Hörers, also beim Übergang aus dem Ruf - in den Gesprächszustand, noch zum Teil zur Verfügung steht und damit die Hochlaufzeit des Sprechsystems wesentlich verkürzt. Die Flexibilität kann weiter erhöht werden, wenn die Schaltsteuerung SC ganz oder teilweise durch einen Mikroprozessor oder Mikrocontroller realisiert wird, der daneben noch weitere Aufgaben wahrnehmen kann. Schließlich sei darauf hingewiesen, daß auf die Darstellung üblicher und insbesondere in der Telefontechnik gebräuchlichen Schutz- und Anpaßmaßnahmen zum Zwecke größerer Übersichtlichkeit verzichtet wurde.

## Patentansprüche

1. Tonrufschaltung
mit einer durch eine Rufwechselspannung (U) gespeisten Gleichrichteinheit (GL, GC), einem steuerbaren ersten Schalter (T1), einem steuerbaren zweiten Schalter (T2), einem Schallwandler (LS, C2; CS) und einer Schaltersteuerung (SC),
**dadurch gekennzeichnet**, daß
- der steuerbare erste Schalter (T1) zwischen erstem Ausgangsanschluß der Gleichrichteinheit (GL, GC) und erstem Anschluß des Schallwandlers (LS, C2; CS) angeordnet ist,
- der steuerbare zweite Schalter (T2) zwischen erstem und zweitem Anschluß des Schallwandlers (LS, C2; CS) angeordnet ist,
- zwischen zweitem Anschluß des Schallwandlers (LS, C2; CS) und zweitem Anschluß der Gleichrichteinheit (GL, GC) ein Kondensator (C1) angeordnet ist, und
- die Schaltersteuerung (SC) aus dem Kondensator (C1) gespeist wird, wobei die Schaltersteuerung (SC) abhängig von der Rufwechselspannung (U) die beiden Schalter (T1, T2) abwechselnd und zueinander gegenphasig öffnet und schließt.

2. Tonrufschaltung nach Anspruch 1,
**dadurch gekennzeichnet**, daß
der erste Schalter (T1) als ein in Emitterfolgerschaltung betriebener Transistor ausgebildet ist, an dessen Basis eine gegenüber dem Kondensator (C1) um einen bestimmten Wert höhere Spannung anliegt.

3. Tonrufschaltung nach Anspruch 1 oder 2,
**gekennzeichnet durch**
eine Diode (D) zwischen zweitem Schalter (T2) und dem Kondensator (C1) und durch einen steuerbaren fünften Schalter (T5) zwischen zweitem Schalter (T2) und zweitem Anschluß der Gleichrichteinheit (GL, GC), der bei Überschreiten einer vorgegebenen Spannung am Kondensator (C1) durch die Schaltersteuerung (SC) geschlossen wird.

4. Tonrufschaltung nach Anspruch 1,
**gekennzeichnet durch**
einen steuerbaren dritten Schalter (T3) zwischen zweitem Schalter (T2) und zweitem Anschluß des Schallwandlers (LS, C2; CS), der gleichzeitig mit dem ersten Schalter (T1) geöffnet und geschlossen wird, und durch einen steuerbaren vierten Schalter (T4) zwischen erstem Ausgangsanschluß der Gleichrichterschaltung (GL, GC) und zweitem Anschluß des Schallwandlers (LS, C2; CS), der gleichzeitig mit dem zweiten Schalter (T2) geöffnet und geschlossen wird.

5. Tonrufschaltung nach Anspruch 4,
**dadurch gekennzeichnet**, daß
der erste und der vierte Schalter (T1, T4) als in Emitterfolgerschaltung betriebene Transistoren ausgebildet sind, an deren Basen eine gegenüber dem Kondensator (C1) um einen bestimmten Wert höhere Spannung anliegt.

6. Tonrufschaltung nach Anspruch 4 oder 5,
**gekennzeichnet durch**
eine Diode (D) zwischen zweitem bzw. drittem Schalter (T2, T3) und dem Kondensator (C1) und durch einen steuerbaren fünften Schalter (T5) zwischen zweitem bzw. drittem Schalter (T2, T3) und zweitem Anschluß der Gleichrichteinheit (GL, GC), der bei Überschreiten einer vorgegebenen Spannung am Kondensator (C1) durch die Schaltersteuerung (SC) geschlossen wird.

7. Tonrufschaltung nach Anspruch 4 bis 6,
**dadurch gekennzeichnet**, daß
durch ein an die Schaltersteuerung (SC) angelegtes Auswahlsignal (MOD) der dritte Schalter (T3) geschlossen und der vierte Schalter (T4) geöffnet gehalten wird.

8. Tonrufschaltung nach Anspruch 1 oder 7,
**dadurch gekennzeichnet**, daß
ein dynamischer Schallwandler (LS, C2) vorgesehen ist, zu dem ein weiterer Kondensator (C2) in Reihe geschaltet ist.

9. Tonrufschaltung nach Anspruch 8,
**dadurch gekennzeichnet**, daß
der dynamische Schallwandler (LS, C2) zudem an eine durch eine Sprechwechselspannung (S) aussteuerbare potentialfreie Endstufe (BD) angeschlossen ist, die bei Auftreten der Rufwechselspannung (U) außer Betrieb gesetzt ist.

10. Tonrufschaltung nach Anspruch 8 oder 9,
**dadurch gekennzeichnet,** daß
der zweite Schalter (T2) solange geschlossen und der erste Schalter (T1) solange geöffnet gehalten wird, bis der weitere Kondensator (C2) entladen ist.

11. Tonrufschaltung nach Anspruch 1 bis 10,
**gekennzeichnet durch**
einen durch die Gleichrichteinheit (GL, GC) gespeisten Spannungsregler (VR), der ausgangsseitig dem Kondensator (C1) parallel geschaltet ist.

12. Tonrufschaltung nach Anspruch 1 bis 11,
**gekennzeichnet durch**
eine Klemmschaltung (CC), die bei geöffneten Schaltern (T1 bis T5) die Spannung über dem ersten Schalter (T1) begrenzt.

13. Tonrufschaltung nach Anspruch 1 bis 12,
**gekennzeichnet durch**
eine Einschaltlogik (EL), die erst bei Überschreiten eines vorgegebenen Wertes der Rufwechselspannung (U) die Gleichrichteinheit (GL, GC) aktiviert.

## Claims

1. Ringing circuit
having a rectification unit (GL, GC) which is fed by a ringing AC voltage (U), having a controllable first switch (T1), having a controllable second switch (T2), having a sound transducer (LS, C2; CS) and having a switch controller (SC),
characterized in that
- the controllable first switch (T1) is arranged between a first output connection of the rectification unit (GL, GC) and a first connection of the sound transducer (LS, C2; CS),
- the controllable second switch (T2) is arranged between the first and the second connection of the sound transducer (LS, C2; CS),
- a capacitor (C1) is arranged between the second connection of the sound transducer (LS, C2; CS) and the second connection of the rectification unit (GL, GC), and
- the switch controller (SC) is fed from the capacitor (C1), the switch controller (SC) opening and closing the two switches (T1, T2) alternately and in antiphase to one another as a function of the ringing AC voltage (U) .

2. Ringing circuit according to Claim 1,
characterized in that
the first switch (T1) is designed as a transistor which is operated in an emitter-follower circuit and on whose base a voltage is present which is higher by a specific amount than that on the capacitor (C1).

3. Ringing circuit according to Claim 1 or 2,
characterized by
a diode (D) between the second switch (T2) and the capacitor (C1), and by a controllable fifth switch (T5) between the second switch (T2) and the second connection of the rectification unit (GL, GC), which fifth switch (T5) is closed by the switch controller (SC) if a predetermined voltage is exceeded on the capacitor (C1).

4. Ringing circuit according to Claim 1,
characterized by
a controllable third switch (T3) between the second switch (T2) and the second connection of the sound transducer (LS, C2; CS), which third switch (T3) is opened and closed at the same time as the first switch (T1), and by a controllable fourth switch (T4) between the first output connection of the rectifier circuit (GL, GC) and the second connection of the sound transducer (LS, C2; CS), which fourth switch (T4) is opened and closed at the same time as the second switch (T2).

5. Ringing circuit according to Claim 4,
characterized in that
the first and the fourth switch (T1, T4) are designed as transistors which are operated in emitter-follower circuits and at whose bases a voltage is present which is higher by a specific amount than that on the capacitor (C1).

6. Ringing circuit according to Claim 4 or 5,
characterized by
a diode (D) between the second and third switches (T2, T3) and the capacitor (C1), and by a controllable fifth switch (T5) between the second and third switches (T2, T3) and the second connection of the rectification unit (GL, GC), which fifth switch (T5) is closed by the switch controller (SC) if a predetermined voltage is exceeded on the capacitor (C1).

7. Ringing circuit according to Claims 4 to 6,
characterized in that
the third switch (T3) is held closed and the fourth switch (T4) is held open, by a selection signal (MOD) which is applied to the switch controller (SC).

8. Ringing circuit according to Claim 1 or 7,
characterized in that
a dynamic sound transducer (LS, C2) is provided, and a further capacitor (C2) is connected in series with it.

9. Ringing circuit according to Claim 8,
characterized in that
the dynamic sound transducer (LS, C2) is additionally connected to a floating output stage (BD) which can be driven by a voice AC voltage (S) and is rendered inoperative when the ringing AC voltage (U) occurs.

10. Ringing circuit according to Claim 8 or 9,
characterized in that
the second switch (T2) is held closed and the first switch (T1) is held open until the further capacitor (C2) is discharged.

11. Ringing circuit according to Claims 1 to 10,
characterized by
a voltage regulator (VR) which is fed by the rectification unit (GL, GC) and, on the output side, is connected in parallel with the capacitor (C1).

12. Ringing circuit according to Claims 1 to 11,
characterized by
a clamping circuit (CC) which limits the voltage across the first switch (T1) when the switches (T1 to T5) are open.

13. Ringing circuit according to Claims 1 to 12,
characterized by
a switch-on logic device (EL) which activates the rectification unit (GL, GC) only if the ringing AC voltage (U) exceeds a predetermined value.

## Revendications

1. Circuit de sonnerie
comprenant un ensemble redresseur (GL, GC) alimenté par une tension alternative d'appel (U), un premier commutateur pilotable (T1), un deuxième commutateur pilotable (T2), un transducteur acoustique (LS, C2; CS) et une commande de commutateur (SC),
**caractérisé en ce que**
- le premier commutateur pilotable (T1) est placé entre la première connexion de sortie de l'ensemble redresseur (GL, GC) et la première connexion du transducteur acoustique (LS, C2; CS),
- le deuxième commutateur pilotable (T2) est placé entre la première et la deuxième connexion du transducteur acoustique (LS, C2; CS);
- entre la deuxième connexion du transducteur acoustique (LS, C2; CS) et la deuxième connexion de l'ensemble redresseur (GL, GC) est installé un condensateur (C1), et
- la commande de commutateur (SC) est alimentée par le condensateur (C1), cette commande de commutateur (SC) ouvrant et fermant alternativement et en opposition de phase l'un par rapport à l'autre les deux commutateurs (T1, T2), en fonction de la tension alternative d'appel (U).

2. Circuit de sonnerie selon la revendication 1,
**caractérisé en ce que**
le premier commutateur (T1) est conçu sous forme d'un transistor exploité comme un montage émetteur-suiveur à la base duquel est fournie une tension ayant une certaine valeur qui est plus élevée que celle du condensateur (C1).

3. Circuit de sonnerie selon la revendication 1 ou 2,
**caractérisé par**
une diode (D) entre le deuxième commutateur (T2) et le condensateur (C1) et par un cinquième commutateur pilotable (T5) entre le deuxième commutateur (T2) et la deuxième connexion de l'ensemble redresseur (GL, GC), qui est fermé, en cas de dépassement d'une tension prédéfinie sur le condensateur (C1), par la commande de commutateur (SC).

4. Circuit de sonnerie selon la revendication 1,
**caractérisé par**
un troisième commutateur pilotable (T3) entre le deuxième commutateur (T2) et la deuxième connexion du transducteur acoustique (LS, C2; CS), qui est ouvert et fermé simultanément avec le premier commutateur (T1), et par un quatrième commutateur pilotable (T4) entre la première connexion de sortie du circuit de redresseur (GL, GC) et la deuxième connexion du transducteur acoustique (LS, C2; CS), qui est ouvert et fermé simultanément avec le deuxième commutateur (T2).

5. Circuit de sonnerie selon la revendication 4,
**caractérisé en ce que**
les premier et quatrième commutateurs (T1, T4) sont conçus sous forme de transistors exploités en tant que montage émetteur-suiveur à la base desquels est fournie une tension d'une certaine valeur qui est plus élevée que celle du condensateur (C1).

6. Circuit de sonnerie selon la revendication 4 ou 5,
**caractérisé par**
une diode (D) entre le deuxième resp. le troisième commutateur (T2, T3) et le condensateur (C1) et par un cinquième commutateur pilotable (T5) entre le deuxième resp. le troisième commutateurs (T2, T3) et la deuxième connexion de l'ensemble redresseur (GL, GC), qui en cas de dépassement d'une tension prédéfinie sur le condensateur (C1), est fermé par la commande de commutateur (SC).

7. Circuit de sonnerie selon la revendication 4 à 6,
**caractérisé en ce que**
par un signal de sélection (MOD) fourni à une commande de commutateur (SC), le troisième commutateur (T3) est maintenu fermé et le quatrième commutateur (T4) est maintenu ouvert.

8. Circuit de sonnerie selon la revendication 1 ou 7,
**caractérisé en ce**
qu'un transducteur acoustique dynamique (LS, C2) est prévu, sur lequel un condensateur supplémentaire (C2) est monté en série.

9. Circuit de sonnerie selon la revendication 8,
**caractérisé en ce que**
le transducteur acoustique dynamique (LS, C2) est en outre raccordé à un étage de sortie sans potentiel (BD) modulable par une tension alternative téléphonique (S), qui est mis hors tension lorsque la tension alternative d'appel (U) est fournie.

10. Circuit de sonnerie selon la revendication 8 ou 9,
**caractérisé en ce que**
le deuxième commutateur (T2) est maintenu fermé et le premier commutateur (T1) est maintenu ouvert jusqu'à ce le condensateur supplémentaire (C2) soit déchargé.

11. Circuit de sonnerie selon la revendication 1 à 10,
**caractérisé par**
un régulateur de tension (VR) alimenté par un ensemble redresseur (GL, GC), qui est monté en parallèle au condensateur (C1) ) sur son côté sortie.

12. Circuit de sonnerie selon la revendication 1 à 11,
**caractérisé par**
un circuit de blocage (CC) qui limite la tension traversant le premier commutateur (T1) lorsque les commutateurs (T1 à T5) sont ouverts.

13. Circuit de sonnerie selon la revendication 1 à 12,
**caractérisé par**
une logique d'enclenchement (EL) qui n'active l'ensemble redresseur (GL, GC) qu'en cas de dépassement d'une valeur prédéfinie de la tension alternative d'appel (U).
